# EUROPÄISCHE PATENTSCHRIFT

(11) **EP 1 389 160 B1**
(45) Veröffentlichungstag und Bekanntmachung des Hinweises auf die Patenterteilung: **02.02.2005**
(21) Anmeldenummer: 02769416.5
(22) Anmeldetag: 04.05.2002
(51) Int. Cl.: B29C 45/17, B29C 45/66

(54) **FORMAUFSPANNPLATTE FÜR EINE SPRITZGIESSMASCHINE, SOWIE EINE ZWEI-PLATTEN-SPRITZGIESSMASCHINE HIERMIT**
MOULD CLAMPING PLATE FOR AN INJECTION MOULDING MACHINE AND A DOUBLE PLATE INJECTION MOULDING MACHINE THEREWITH
PLATEAU DE SERRAGE DE MOULE POUR MACHINE DE MOULAGE PAR INJECTION ET MACHINE DE MOULAGE PAR INJECTION COMPRENANT DEUX PLATEAUX DE CE TYPE

(30) Priorität: 12.05.2001 DE 10123104
(43) Veröffentlichungstag der Anmeldung: 18.02.2004
(73) Patentinhaber: Mannesmann Plastics Machinery GmbH, 80997 München (DE)
(72) Erfinder: FISCHBACH, Gunther, 82256 Fürstenfeldbruck (DE); Legewie, Guido, 44627 Herne (DE); Becker, Klaus, 58300 Wetter (DE)
(74) Vertreter: Zollner, Richard, Dipl.-Phys.
(86) Internationale Anmeldenummer: PCT/EP2002/004913
(87) Internationale Veröffentlichungsnummer: WO 2002/092318

(56) Entgegenhaltungen:
- EP-A- 0 381 770
- EP-A- 0 747 196
- WO-A-98/41380
- DE-U- 20 114 341

## Beschreibung

Die Erfindung betrifft eine Formaufspannplatte einer Spritzgießmaschine gemäß dem Oberbegriff des Anspruchs 1 sowie eine Zwei-Platten-Spritzgießmaschine hiermit.

In der WO 98/41380 ist eine Aufspannplatte für eine Schließeinheit beschrieben, die mit einer internen federartigen Charakteristik die Verformung eines in der Schließeinheit aufgenommenen Formwerkzeuges verhindert. Die Aufspannplatte umfasst eine Formwerkzeug-Unterstützungseinheit sowie eine an Zugholmen gehaltene Trägerstruktur. Zwischen der Unterstützungseinheit und der Trägerstruktur ist eine flexible Zwischenstruktur angeordnet, die bei Belastung eine flexible Bewegung zwischen der Trägerstruktur und der Formwerkzeug-Unterstützungseinheit zulässt.

Die EP 0 381 770 beschreibt eine Zwei-Platten-Schließeinheit, wobei Spindelmuttem in einer beweglichen Platte drehbar, jedoch axial fest aufgenommen sind. Spindelstangen sind mit der festen Platte fest verbunden und wirken mit den entsprechend angetriebenen Spindelmuttern zur Verschiebung der beweglichen Platte zusammen. Beim Schließkraftaufbau verlängern sich die Spindelstangen geringfügig.

Aus dem US-Patent 5,593,711 ist eine Formaufspannplatte einer Kunststoffspritzgießmaschine bekannt, die im wesentlichen aus einer Grundplatte, einem kegelstumpfförmigen Mittelteil und einer parallel zu der Grundplatte verlaufenden Vorderplatte zur Aufnahme des Formwerkzeuges aufgebaut ist.

Die Grundplatte ist in ihren Eckbereichen mit Bohrungen für die Aufnahme von vier Holmen einer Spritzgießmaschine versehen. Das als Hohlkörper ausgebildete kegelstumpfförmige Mittelteil ist mit seiner Basis mittig auf der Grundplatte angeordnet. An der Stumpfspitze des Mittelteils schließt sich die Vorderplatte für das Formwerkzeug an. Die Vorderplatte wird somit nur in ihrem Zentralbereich von dem Mittelteil unterstützt. Diese Ausbildung der Formaufspannplatte soll ermöglichen, dass die Vorderplatte des Formwerkzeuges auch unter der Schließkraft der Spritzgießmaschine eben bleibt, wodurch ein Aufklaffen der Formwerkzeughälften verhindert werden soll.

Des Weiteren ist aus der europäischen Patentschrift EP 0 789 648 B1 eine Spritzgießmaschine mit einem im wesentlichen C-förmigen Maschinenrahmen mit zwei nicht über Holme verbundenen Rahmenschenkeln bekannt. An einem Rahmenschenkel ist eine ortsfeste Formaufspannplatte gelagert; an dem anderen Rahmenschenkel ist eine Flanschplatte einer Schließeinrichtung befestigt. Die Schließeinrichtung besteht im wesentlichen aus einer hydraulischen Kolben-/Zylindereinheit und bewegt die verschiebbar auf dem Maschinenrahmen abgestützte bewegbare Formaufspannplatte. Die Flanschplatte und die ortsfeste Formaufspannplatte sind jeweils über sogenannte Halteteile an den Rahmenschenkeln des Maschinenrahmens befestigt. Während des Schließvorganges werden die Halteteile der Flanschplatte auf Zug und die der ortfesten Formaufspannplatte auf Druck beansprucht. Die Halteteile sind funktionsmäßig vergleichbar mit Federn, deren Elastizität geringer als die des Maschinenrahmens sind. In einer Ausführungsform sind mehrere Haltelemente vorgesehen, die über die Höhe der ortsfesten Formaufspannplatte und der Flanschplatte verteilt sind und eine jeweils voneinander abweichende Elastizität aufweisen, wobei die unteren Halteteile eine größere Elastizität als die oberen Halteteile haben. Die Halteteile sind als Körper aus Federstahl ausgebildet, die durch Einbringen von Schlitzen geschwächt werden. Im unteren Abschnitt sind hierbei mehr oder tiefere Schlitze vorgesehen, um entsprechend die Elastizität zu erhöhen. Wenn die Rahmenschenkel des Maschinenrahmens nun beim Spritzvorgang oben auseinandergedrückt werden, so können die ortsfeste Formaufspannplatte und die Flanschplatte eine Kippbewegung relativ zum Maschinenrahmen durchführen, wodurch die Plattenparallelität zwischen den Formaufspannplatten erhalten bleiben soll. Die Halteelemente bilden somit ein achsloses Gelenk, das neben Rotationsbewegungen auch translatorische Bewegungen zulassen soll.

Ferner beschreibt die europäische Patentanmeldung EP 0 381 107 B1 eine Schließeinrichtung für eine horizontale Zwei-Platten-Spritzgießmaschine für Kunststoff. Entsprechend weist die Spritzgießmaschine eine feststehende Formaufspannplatte sowie eine bewegliche Formaufspannplatte auf, an deren einander zugewandten Seiten jeweils Hälften eines Formwerkzeuges aufgespannt sind. Die feststehende und im wesentlichen rechteckförmige Formaufspannplatte ist über vier in den Ecken eines gedachten Viereckes angeordnete Spindeln mit der beweglichen Formaufspannplatte verbunden. Die Spindeln sind hierbei drehfest und freitragend an der feststehenden Formaufspannplatte angeordnet. Die bewegliche Formaufspannplatte ist zum Schließen und Öffnen der Formwerkzeuge über entsprechend in ihren Ecken angeordnete entlang der Spindeln auf die feststehende Formaufspannplatte zu und von dieser weg bewegbar. Für den Antrieb der beweglichen Formaufspannplatte ist an deren der Aufspannfläche für das Formwerkzeug abgewandten Seite je Spindel jeweils eine Spindelmutter befestigt, die alle gemeinsam über einen Antrieb, vorzugsweise einen Elektromotor, synchron drehbar sind. Die Spindelmutter ist als Kugelgewindemutter ausgebildet. Nach dem Schließen der Formwerkzeuge erfolgt das Aufbringen der Schließkraft auf die Hälften des Formwerkzeuges über eine neben dem Elektromotor zusätzlich an die Spindeln bzw. die Spindelmuttern angreifende hydraulische Kolben-/Zylindereinheit. Die Kolben-/Zylindereinheit weist einen Ringkolben auf, durch den die jeweilige Spindel geführt ist. Um auch ein Aufreißen der Hälften des Formwerkzeuges nach dem erfolgten Spritzvorgang zu ermöglichen, ist die Kolben-/Zylindereinheit doppelwirkend ausgebildet.

Wenn sich bei dieser Zwei-Platten-Spritzgießmaschine unter dem Schließdruck die Formaufspannplatten neigen oder verformen, werden die Spindel auf Biegung belastet und somit die Spindel und/oder Spindeltriebe einem erhöhtem Verschleiß unterworfen, der bis zu deren Zerstörung führen kann.

Hiervon ausgehend liegt der vorliegenden Erfindung die Aufgabe zugrunde, eine konstruktiv einfache Formaufspannplatte einer Spritzgießmaschine sowie eine Zwei-Platten-Spritzgießmaschine hiermit zu schaffen, die gleichzeitig eine elastische Befestigungsmöglichkeit für eine Verbindung der Formaufspannplatte an einem Halte- und/oder Führungselemente einer Spritzgießmaschine aufweist.

Diese Aufgabe wird durch eine Formaufspannplatte mit den Merkmalen des Anspruches 1 gelöst. Eine horizontale Zwei-Platten-Spritzgießmaschine mit diesen Formaufspannplatten ist in Anspruch 8 angegeben. Vorteilhafte Ausgestaltungen der Erfindung sind in den Ansprüchen 2 bis 7 und 9 bis 11 angegeben.

Erfindungsgemäß wird bei einer Formaufspannplatte einer Spritzgießmaschine mit in mindestens einem Teil seiner Eckbereiche angeordneten Öffnungen für die Aufnahme von säulenartigen Halte- und/oder Führungselementen einer Spritzgießmaschine, eine elastische Befestigungsmöglichkeit für eine Verbindung der Formaufspannplatte an den Halte- und/oder Führungselementen dadurch erreicht, daß die Formaufspannplatte aus einem plattenförmigen Zentralbereich und die Öffnungen umschließende Hülsen aufgebaut ist, die Hülsen mit ihrer dem Zentralbereich zugewandten Außenfläche nur teilweise mit dem Zentralbereich verbunden ist. Diese Trennung der Formaufspannplatte in eine steifen Zentralbereich und hieran elastisch quasi federnd gelagerten Hülsen sowie die einteilige Ausbildung des Zentralbereichs und der Hülsen, vorzugsweise als Stahlgußteil, erweist sich konstruktiv als sehr einfach.

Derartige Formaufspannplatten eignen sich bevorzugt für einen Einsatz in holmlosen Kunststoffspritzgießmaschinen, wobei die Formaufspannplatten dann über in die Öffnungen der Hülsen eingesteckte Halte- und/oder Führungselemente mit dem zumeist u-förmigen Maschinenrahmen verbunden werden. Durch diese achsgelenklose Aufhängung der Formaufspannplatten kann dann erfolgreich vermieden werden, daß in Folge der Schließkraft ein Nachgeben der Schenkel des u-förmigen Maschinenrahmens zu einer Auflösung der Parallelität der Formaufspannplatten führt.

In konstruktiver Ausgestaltung wird die elastische Verbindung zwischen in dem Übergangsbereich zwischen dem Zentralbereich und den Hülsen als Kombination eines Ringsteges mit einem Ringspalt ausgebildet. Hierbei weist zur Einstellung der gewünschten Elastizität der Ringspalt eine Tiefe auf, die größer als die Hälfte der Dicke des Zentralbereiches der quaderförmigen Formaufspannplatte.

Vorzugsweise ist der Zentralbereich im wesentlichen rechteckig und die in den Eckbereichen angeordneten Hülsen ragen teilweise über die Rechteckkontur hervor. Außerdem ist der Außenumfang der Hülsen zusätzlich über einen Steg mit dem Randbereich des Zentralbereiches verbunden ist. Unter Schließdruck werden die Stege, die sich an die Ringstege anschließen, auf Torsion und auf Biegung beansprucht. Die Stege sind in vorteilhafter Ausgestaltung keilförmig und über die gesamte Dicke des Zentralbereiches und Länge der Hülse mit dem Randbereich des Zentralbereiches verbunden.

Bevorzugt sind derartige Formaufspannplatten für eine Zwei-Platten-Spritzgießmaschine verwendbar. Die Spritzgießmaschine weist hierbei eine auf einem Maschinenrahmen angeordnete feststehende Formaufspannplatte und eine beweglichen Formaufspannplatte auf. Die Platten sind mit einer mehrere Spindeltriebe mit Spindeln aufweisenden Schließeinheit zum Öffnen und Schließen versehen.

In bevorzugter Ausführungsform sind in den Eckbereichen der im wesentlichen rechteckförmigen feststehenden Formaufspannplatte jeweils eine und somit insgesamt 4 Spindeln angeordnet. Diese Spindeln erstrecken sich in Richtung der bewegbaren Formaufspannplatte und durch die Eckbereiche der bewegbaren Formaufspannplatte sowie hieran befestigte Spindelmuttern hindurch. Diese Spindelmuttern sind über einen Antrieb drehbar, um die an den Formaufspannplatten befestigten Formwerkzeuge zu öffnen und zu schließen.

Zusätzlich ist die bewegliche Formaufspannplatte über zwei, vorzugsweise als Stützrollen ausgebildete Lager auf dem Maschinenrahmen abgestützt. Die Stützrollen sind an der Unterseite der beweglichen Formaufspannplatte jeweils in den seitlichen Randbereichen angeordnet.

Die Spindeltriebe sind vorzugsweise als Kugelgewindetriebe ausgebildet, da diese besonderes reibungsarm und somit geräusch- und wartungsarm sind. Zusätzlich ist jedem Spindeltrieb eine Kolben-/Zylindereinheit für das Aufbringen der Schließkraft zugeordnet, so daß der Spindeltrieb nur zum Öffnen und Schließen der Formwerkzeuge dient.

Nachfolgend wird die vorliegende Erfindung an Hand von einem in einer Zeichnung dargestellten Ausführungsbeispiel näher erläutert. Es zeigen:
- Figur 1: eine schematische Perspektivansicht einer Schließeinheit 1 einer horizontalen Zwei-Platten-Spritzgießmaschine für Kunststoffe,
- Figur 2: eine Ansicht auf eine Vorderseite einer Formaufspannplatte und
- Figur 3: einen Seitenansicht von Figur 2.

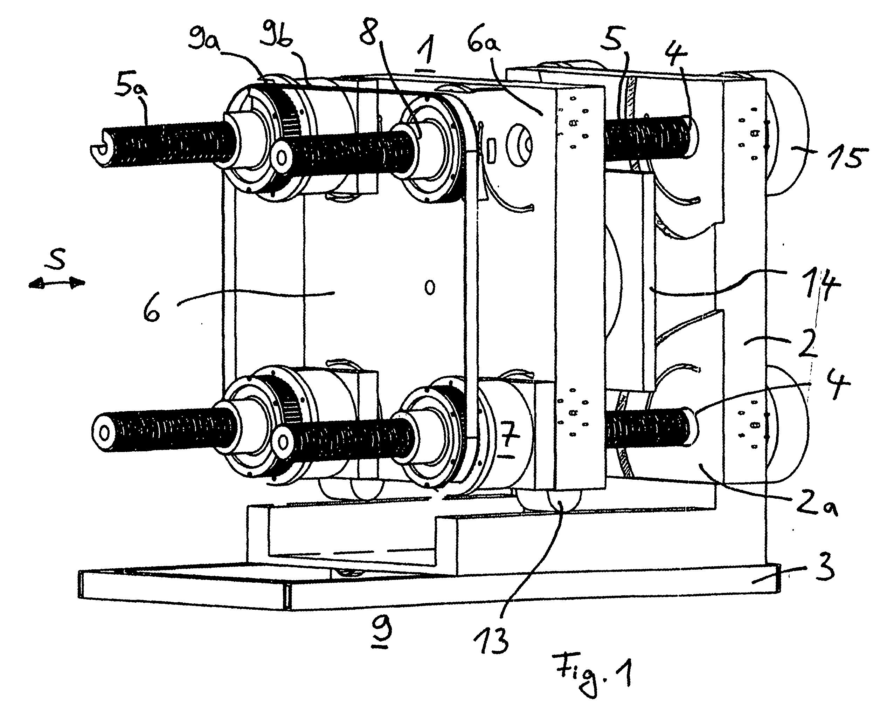

Die Figur 1 zeigt eine schematische Perspektivansicht einer Schließeinheit 1 einer horizontalen Zwei-Platten-Spritzgießmaschine für Kunststoffe. Die Spritzgießmaschine besteht im wesentlichen aus der in der Figur rechts dargestellten feststehenden Formaufspannplatte 2, die aufrechtstehend auf dem Maschinenrahmen 3 befestigt ist. Die feststehende Formaufspannplatte 2 hat eine im wesentlichen quaderförmige nahezu quadratische Form und ist in ihren Eckbereichen 2a jeweils mit einer Bohrung 4 versehen, in die jeweils eine Spindel 5 eingesteckt ist. Die Spindel 5 ist auf der Rückseite, d. h. in der Figur dargestellten rechten Seite, über ein lösbares Befestigungselement 15 und drehfest mit der feststehenden Formaufspannplatte 2 verbunden.

Auch ist aus der Figur 1 ersichtlich, daß die vier Spindeln 5 sich freitragend sowie im wesentlichen rechtwinklig von der feststehenden Formaufspannplatte 2 erstrecken. Da die feststehende Formaufspannplatte 2 nahezu vertikal ausgerichtet ist, erstrecken sich dementsprechend die Spindeln 5 horizontal. Auf der Vorderseite der feststehenden Formaufspannplatte 2 ist üblicherweise in dem zwischen den Spindeln 5 vorhandenen Raum eine Hälfte eines Formwerkzeugs 14 befestigt.

Auf die der feststehenden Formaufspannplatte 2 abgewandten Enden 5a der Spindeln 5 ist eine mit entsprechenden Bohrungen in ihren Eckbereichen 6a versehene bewegliche Formaufspannplatte 6 aufgeschoben, die üblicherweise die zweite Hälfte des Formwerkzeuges auf ihrer Vorderseite, im vorliegenden Fall auf ihrer rechten Seite, trägt. Die Spindeln 5 sind jeweils über einen Spindeltrieb 7 mit der Rückseite der beweglichen Formaufspannplatte 6 verbunden. Der Spindeltrieb 7 besteht im wesentlichen aus einer drehbar an der Rückseite der beweglichen Formaufspannplatte 6 gelagerten Spindelmutter 8, die im Eingriff mit der Spindel 5 steht. Diese Spindelmutter 8 ist vorzugsweise als Kugelgewindespindelmutter ausgebildet. Für die Bewegung zum Öffnen und Schließen der beiden Hälften des Formwerkzeuges und somit einem Verfahren der beweglichen Formaufspannplatte 6 entlang der Spindeln 5 in Richtung auf die feststehende Formaufspannplatte 2 zu sind die Spindelmuttern 8 mit einem Antrieb 9 verbunden. Im vorliegenden Ausführungsbeispiel ist dieser Antrieb 9 als Riementrieb ausgebildet, dessen Riemen 9b mit konzentrisch zu den Spindeln 5 drehbaren im Bereich des Spindeltrieb 7 angeordneten Riemenscheiben 9a im Eingriff steht, die in Wirkverbindung mit der Spindelmutter 8 stehen. Da alle vier Riemenscheiben 9a über einen gemeinsamen Riemen 9b angetrieben werden ist eine synchrone Bewegung der Spindeltriebe 7 und somit der beweglichen Formaufspannplatte 6 gewährleistet.

Ferner ist aus der Figur 1 zu ersehen, daß die bewegliche Formaufspannplatte 6 über Stützrollen 13 auf den Maschinenrahmen 3 rollend gelagert ist. Diese Stützrollen 13 sind über horizontale und quer zur Schließrichtung S ausgerichtete Achsen an der Unterseite der beweglichen Formaufspannplatte 6 gelagert. Es sind zwei Stützrollen 13 an der beweglichen Formaufspannplatte 6 jeweils in ihren seitlichen Randbereichen vorgesehen.

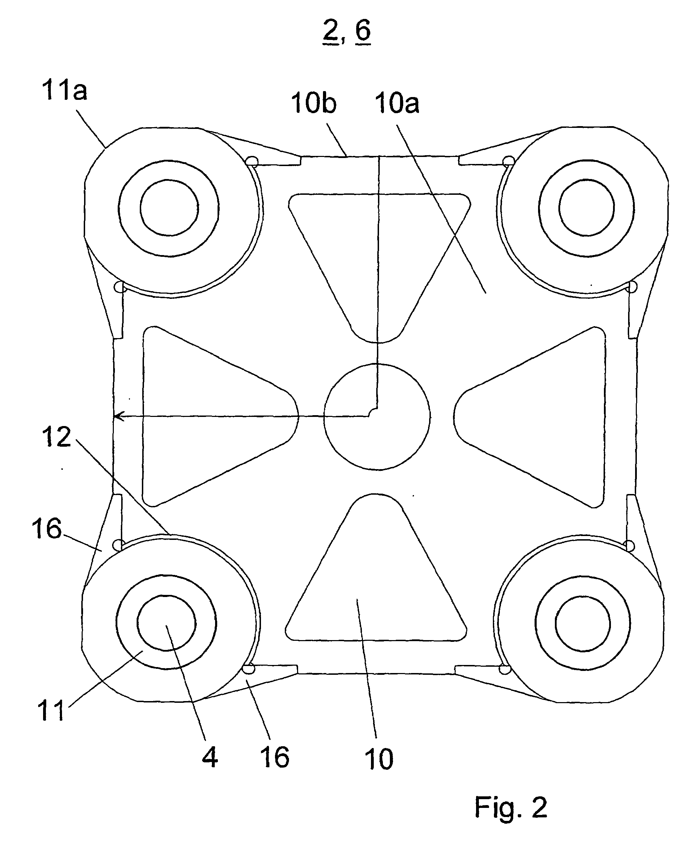

Die Figur 2 zeigt eine Ansicht auf eine Vorderseite einer Formaufspannplatte 2, 6. Es ist ersichtlich, daß die Formaufspannplatte 2, 6 aus einem im wesentlichen kreuzförmigen Zentralbereich 10 besteht, der entsprechend vier kreisförmige Aussparungen aufweist. Der Zentralbereich 10 ist in Leichtbauweise mit einer Basisplatte, die über eine Rippenstruktur 10a verstärkt wird, ausgebildet. In jedem der vier Eckbereiche 2a, 6a sind Hülsen 11 angeordnet, die Öffnungen 4 aufweisen, in die säulenartige Halte- und/oder Führungselemente einer Spritzgießmaschine einführbar sind. Im vorliegenden Fall einer Verwendung der erfindungsgemäßen Formaufspannplatte 2, 6 als feststehende Formaufspannplatte 2 sowie als bewegliche Formaufspannplatte 6 für eine Zwei-Platten-Spritzgießmaschine für Kunststoffe sind in der feststehenden Formaufspannplatte 2 und den Öffnungen 4 Spindeln 5 feststehend angeordnet, sowie durch die Öffnungen 4 der beweglichen Formaufspannplatte die Spindeln 5 hindurchgeführt und angrenzend an die Hülsen 11 der Spindeltrieb 7 mit der jeweiligen Spindelmutter 8 befestigt.

Die Figur 2 zeigt weiterhin, daß die Hülsen 11 jeweils über einen Ringspalt 12 von dem Zentralbereich 10 der Formaufspannplatte 2, 6 getrennt sind bzw. über einen verbleibenden Ringsteg 17 mit dem Zentralbereich 10 verbunden sind. Die Länge des kreisringförmigen Ringspaltes 12 beträgt in Bezug auf den Mittelpunkt der Hülse 11 gesehen etwa 110°. Der Ringspalt 12 endet jeweils im Randbereich des im wesentlichen rechteckförmigen Zentralbereiches 10 der Formaufspannplatte 2, 6. Der Ringspalt ist jeweils auf den einander abgewandten Seiten der Formaufspannplatten 2, 6 einer Zwei-Platten-Spritzgießmaschine angeordnet.

Die Hülsen 11 sind nur teilweise in den Aussparungen des Zentralbereiches 10 der Formaufspannplatten 2, 6 eingesetzt und ragen somit etwa mit einem Drittel ihres Durchmessers aus der Rechteckkontur des Zentralbereiches 10 hinaus. Die Hülsen 11 sind zusätzlich über Stege 16 mit dem seitlichen Rand 10b des Zentralbereiches 10 verbunden. Je Hülse 11 sind jeweils zwei Stege 16 vorgesehen, die im wesentlichen keilförmig sind und die Außenoberfläche 11a der Hülsen 11 mit dem Rand 10b des Zentralbereichs 10 verbinden. Hierbei geht die Außenseite des Steges 16 tangential in die Außenoberfläche 11a der Hülsen 11 über. Dieser Steg 16 verläuft im wesentlichen über die gesamte Dicke d der Formaufspannplatte 2, 6 und dem entsprechend gegenüberliegenden Bereich der Außenoberfläche 11a. Jede Hülse 11 ist somit über einem im Grund des Ringspaltes 12 verbleibenden Ringsteg 17 und den beiden seitlich hiervon angeordneten Stegen 16 mit dem Zentralbereich 10 verbunden. Die dem Zentralbereich 10 zugewandte Außenoberfläche 11a der Hülse 11 ist somit nur teilweise über den Ringsteg 17 mit dem Zentralbereich 10 verbunden.

Der Aufbau der Formaufspannplatten 2, 6 mit der Rippenstruktur 10a sowie den über die Stege 16 und den Ringsteg 17 hieran verbundenen Hülsen 11 eignet sich insbesondere für eine einstückige Ausbildung als Gußteil, vorzugsweise Stahlgußteil. Die Formaufspannplatte 2, 6 kann somit besonders leichtbauend und konstruktiv einfach hergestellt werden.

Die Stege 16 und der Ringsteg 17 bilden eine elastisch nachgiebige Verbindung der Hülsen 11 mit dem Zentralbereich 10, so daß in Folge der Schließkraft auftretende Auslenkungen der Formaufspannplatten 2, 6 nur abgeschwächt an die Hülsen 11 weitergegeben werden. Hierbei werden die Stege 16, 17 auf Torsion und Biegung beansprucht. Die Spindeltriebe 7 und die Spindeln 5 werden somit kaum noch auf Biegung beansprucht. Ihre weitestgehend parallele Position zueinander bleibt somit erhalten und die Spindeltriebe 7 sowie die Spindeln 5 werden geschont.

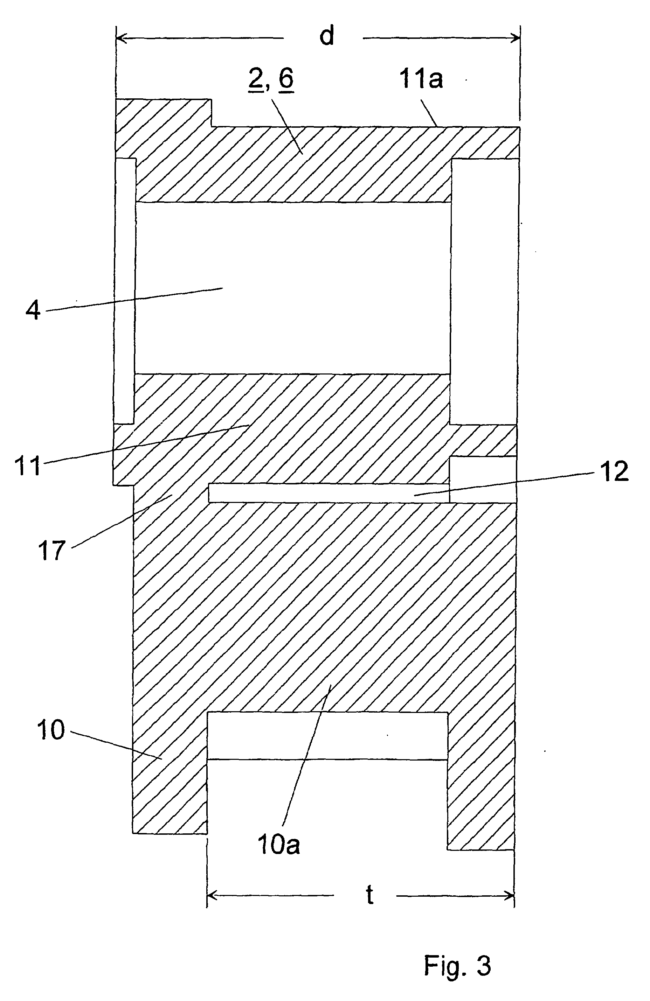

Die weitere Figur 3 zeigt eine Seitenansicht im Schnitt von Figur 2 aus dem Bereich einer Hülse 11 mit einem angrenzenden Zentralbereich 10. Es ist ersichtlich, daß der Ringspalt 12 eine Tiefe t aufweist, die in etwa 4/5 der Dicke d des Zentralbereiches 10 ausmacht.

### Bezugszeichenliste

- 1: Schließeinheit
- 2: feststehende Formaufspannplatte
- 2a: Eckbereich
- 3: Maschinenrahmen
- 4: Öffnung
- 5: Spindel
- 5a: Ende
- 6: bewegliche Formaufspannplatte
- 6a: Eckbereich
- 7: Spindeltrieb
- 8: Spindelmutter
- 9: Antrieb
- 9a: Riemenscheibe
- 9b: Riemen
- 10: Zentralbereich
- 10a: Rippenstruktur
- 10b: Randbereich
- 11: Hülsen
- 11a: Außenoberfläche
- 12: Ringspalt
- 13: Stützrollen
- 14: Formwerkzeug
- 15: Befestigungselement
- 16: Steg
- 17: Ringsteg
- d: Dicke
- t: Tiefe
- S: Schließrichtung

## Patentansprüche

1. Formaufspannplatte (2, 6) einer Spritzgießmaschine mit in mindestens einem Teil seiner Eckbereiche (2a) angeordneten Öffnungen (4) für die Aufnahme von säulenartigen Halte- und/oder Führungselementen (5) einer Spritzgießmaschine,
**dadurch gekennzeichnet,**
**daß** die Formaufspannplatte (2, 6) aus einem plattenförmigen Zentralbereich (10) und die Öffnungen (4) umschließende Hülsen (11) aufgebaut ist, die Hülsen (11) mit ihrer dem Zentralbereich (10) zugewandten Außenoberfläche (11a) nur teilweise mit dem Zentralbereich (10) verbunden ist.

2. Formaufspannplatte nach Anspruch 1, **dadurch gekennzeichnet, daß** der Zentralbereich (10) und die Hülsen (11) einteilig ausgebildet sind.

3. Formaufspannplatte nach Anspruch 1 oder 2, **dadurch gekennzeichnet, daß** die Formaufspannplatte (2, 6) ein Stahlgußteil oder Graugußteil ist

4. Formaufspannplatte nach einem der Ansprüche 1 bis 3, **dadurch gekennzeichnet, daß** in dem Übergangsbereich zwischen dem Zentralbereich (10) und den Hülsen (11) ein Ringspalt (12) und ein Ringsteg (17) angeordnet sind.

5. Formaufspannplatte nach Anspruch 4, **dadurch gekennzeichnet, daß** der Ringspalt (12) eine Tiefe (t) aufweist, die größer als die Hälfte der Dicke (d) des Zentralbereiches (10) der Formaufspannplatte (2, 6) ist.

6. Formaufspannplatte nach einem der Ansprüche 1 bis 5, **dadurch gekennzeichnet, daß** der Zentralbereich (10) im wesentlichen sternoder kreuzförmig ist, die in seinen Aussparungen angeordneten Hülsen (11) teilweise über die Rechteckkontur hervorragen und der Außenumfang der Hülsen (11) zusätzlich über jeweils einen Steg (16) mit dem angrenzenden Randbereich (10b) des Zentralbereiches (10) verbunden ist.

7. Formaufspannplatte nach Anspruch 6, **dadurch gekennzeichnet, daß** der Steg (16) keilförmig ist und über die gesamte Dicke (d) des Zentralbereiches (10) und Länge (d) der Hülse (10) mit dem Randbereich (10b) des Zentralbereiches (10) verbunden ist.

8. Zwei-Platten-Spritzgießmaschine mit einer auf einem Maschinenrahmen angeordneten feststehenden Formaufspannplatte (2) und einer beweglichen Formaufspannplatte (6), mit einer mehrere Spindeltriebe (7) mit Spindeln (5) aufweisenden Schließeinheit (1) zum Öffnen und Schließen von an den Formaufspannplatten (2, 6) befestigbaren Formwerkzeugen, **dadurch gekennzeichnet, daß** die feststehende Formaufspannplatte (2) und die bewegbare Formaufspannplatte (6) nach einem der Ansprüche 1 bis 7 ausgebildet ist.

9. Spritzgießmaschine nach Anspruch 8, **dadurch gekennzeichnet, daß** in den Eckbereichen (2a) der im wesentlichen rechteckförmigen, feststehenden Formaufspannplatte (2) jeweils eine Spindel (5) angeordnet ist, die Spindeln (5) sich in Richtung der bewegbaren Formaufspannplatte (6) erstrecken und durch die Eckbereiche (6a) der bewegbaren Formaufspannplatte (6) und hieran befestigte Spindeltriebe (7) geführt sind, die über einen Antrieb (9) drehbar sind.

10. Spritzgießmaschine nach Anspruch 8 oder 9, **dadurch gekennzeichnet, daß** die Spindeltriebe (7) als Kugelgewindetriebe ausgebildet sind.

11. Spritzgießmaschine nach einem der Ansprüche 8 bis 10, **dadurch gekennzeichnet, daß** die Schließeinheit (1) eine auf die Formwerkzeuge wirkende Kolben-/Zylindereinheit für das Aufbringen der Schließkraft aufweist.

## Claims

1. Platen (2, 6) of an injection moulding machine comprising apertures (4) arranged in at least one part of its corner regions (2a) for receiving column-like holding and/or guide elements (5) of an injection moulding machine, **characterised in that** the platen (2, 6) is constructed from a plate-shaped central region (10) and sleeves (11) enclosing the apertures (4), the sleeves (11) with their outer surface (11a) facing the central region (10) only being partially connected to the central region (10).

2. Platen according to claim 1, **characterised in that** the central region (10) and the sleeves (11) are formed in one piece.

3. Platen according to claim 1 or 2, **characterised in that** the platen (2, 6) is a cast steel part or a grey cast iron part.

4. Platen according to any one of claims 1 to 3, **characterised in that** an annular gap (12) and an annular web (17) are arranged in the transition region between the central region (10) and the sleeves (11).

5. Platen according to claim 4, **characterised in that** the annular gap (12) has a depth (t), which is greater than half the thickness (d) of the central region (10) of the platen (2, 6) .

6. Platen according to any one of claims 1 to 5, **characterised in that** the central region (10) is substantially star-shaped or cross-shaped, the sleeves (11) arranged in recesses thereof partially project over the rectangular contour and the outer periphery of the sleeves (11) is also connected to the adjacent edge region (10b) of the central region (10) via a respective web (16).

7. Platen according to claim 6, **characterised in that** the web (16) is wedge-shaped and is connected to the edge region (10b) of the central region (10) via the entire thickness (d) of the central region (10) and length (d) of the sleeve (10).

8. Two-platen injection moulding machine comprising a fixed platen (2) arranged on a machine frame and a movable platen (6), comprising a closing unit (1) having a plurality of spindle drives (7) with spindles (5) for opening and closing moulds which can be fastened to the platens (2, 6), **characterised in that** the fixed platen (2) and the movable platen (6) are formed according to any one of claims 1 to 7.

9. Injection moulding machine according to claim 8, **characterised in that** a respective spindle (5) is arranged in the corner regions (2a) of the substantially rectangular, fixed platen (2), the spindles (5) extend in the direction of the movable platen (6) and are guided through the corner regions (6a) of the movable platen (6) and spindle drives (7) fastened thereto, which can be rotated via a drive (9).

10. Injection moulding machine according to claim 8 or 9, **characterised in that** the spindle drives (7) are designed as ball screws.

11. Injection moulding machine according to any one of claims 8 to 10, **characterised in that** the closing unit (1) has a piston/cylinder unit acting on the moulds to apply the closing force.

## Revendications

1. Plaque de fixation de moule (2, 6) d'une machine de moulage par injection avec des ouvertures (4) disposées au moins dans une partie de ses zones angulaires (2a) pour la réception d'éléments de retenue et/ou de guidage (5) en forme de colonne d'une machine de moulage par injection, **caractérisée en ce que** la plaque de fixation de moule (2, 6) est constituée d'une zone centrale (10) en forme de plaque et de douilles (11) entourant les ouvertures (4), les douilles (11) avec leur surface extérieure (11a) tournée vers la zone centrale (10) étant seulement partiellement reliées à la zone centrale (10).

2. Plaque de fixation de moule selon la revendication 1, **caractérisée en ce que** la zone centrale (10) et les douilles (11) sont réalisées en une pièce.

3. Plaque de fixation de moule selon la revendication 1 ou 2, **caractérisée en ce que** la plaque de fixation de moule (2, 6) est un élément en acier coulé ou un élément en fonte grise.

4. Plaque de fixation de moule selon l'une des revendications 1 à 3, **caractérisée en ce qu'**un espace annulaire (12) et une traverse annulaire (17) sont disposés dans la zone de transition entre la zone centrale (10) et les douilles (11).

5. Plaque de fixation de moule selon la revendication 4, **caractérisée en ce que** l'espace annulaire (12) comporte une profondeur (t) qui est supérieure à la moitié de l'épaisseur (d) de la zone centrale (10) de la plaque de fixation de moule (2, 6).

6. Plaque de fixation de moule selon l'une des revendications 1 à 5, **caractérisée en ce que** la zone centrale (10) est essentiellement en forme d'étoile ou de croix, **en ce que** les douilles (11) disposées dans ses creux font partiellement saillie au-dessus du contour rectangulaire et **en ce que** le périmètre extérieur des douilles (11) est en plus relié via respectivement une traverse (16) à la zone marginale (10b) adjacente de la zone centrale (10).

7. Plaque de fixation de moule selon la revendication 6, **caractérisée en ce que** la traverse (16) est cunéiforme et reliée à la zone marginale (10b) de la zone centrale (10) sur l'entière épaisseur (d) de la zone centrale (10) et sur la longueur (d) de la douille (11).

8. Machine de moulage par injection à deux plaques avec une plaque de fixation de moule (2) fixe disposée sur un bâti de machine, et une plaque de fixation de moule mobile (6), avec une unité de fermeture (1) comportant plusieurs commandes de broches (7) avec des broches (5) pour l'ouverture et la fermeture d'outils de moulage pouvant être fixés aux plaques de fixation de moule (2, 6), **caractérisée en ce que** la plaque de fixation de moule fixe (2) et la plaque de fixation de moule mobile (6) sont réalisées selon l'une des revendications 1 à 7.

9. Machine de moulage par injection selon la revendication 8, **caractérisée en ce qu'**une broche (5) est respectivement disposée dans les zones angulaires (2a) de la plaque de fixation de moule (2) fixe essentiellement rectangulaire, **en ce que** les broches (5) s'étendent en direction de la plaque de fixation de moule mobile (6) et sont guidées à travers les zones angulaires (6a) de la plaque de fixation de moule mobile (6) et les commandes de broches (7) fixées à cela, commandes de broches qui sont rotatives via un entraînement (9).

10. Machine de moulage par injection selon la revendication 8 ou 9, **caractérisée en ce que** les commandes de broches (7) sont réalisées comme commandes à filetage à billes.

11. Machine de moulage par injection selon l'une des revendications 8 à 10, **caractérisée en ce que** l'unité de fermeture (1) comporte une unité de pistons/cylindres agissant sur les outils de moulage pour appliquer la force de serrage.
